# FASCICULE DE BREVET EUROPEEN

(11) **EP 0 443 947 B1**
(45) Date de publication et mention de la délivrance du brevet: **30.11.1994**
(21) Numéro de dépôt: 91400450.2
(22) Date de dépôt: 20.02.1991
(51) Int. Cl.: C03B 29/04, C03B 25/08

(54) **Four de réchauffage de feuilles de verre**
Ofen zum Heizen von Glasscheiben
Furnace for reheating sheets of glass

(30) Priorité: 21.02.1990 FR 9002089
(43) Date de publication de la demande: 28.08.1991
(73) Titulaire: SAINT-GOBAIN VITRAGE INTERNATIONAL, 92400 Courbevoie (FR)
(72) Inventeur: Mathivat, Denis, F-60150 Thourotte (FR); Petitcollin, Jean-Marc, F-60150 Thourotte (FR)
(74) Mandataire: Menes, Catherine

(56) Documents cités:
- EP-A- 0 186 841
- CH-A- 340 962
- US-A- 3 744 985

## Description

L'invention a trait aux techniques de chauffage de feuilles de verre en vue d'un traitement thermique par refroidissement rapide du type trempe thermique - ou par refroidissement lent du type recuisson - associé éventuellement à un formage. Ces techniques de chauffage s'appliquent essentiellement aux installations destinées à la production de vitrages bombés pour des véhicules automobiles.

Les traitements à chaud de feuilles de verre posées à plat, tels que ceux énumérés ci-dessus, nécessitent une parfaite maîtrise de l'échauffement du verre. Un écart de température d'une dizaine de degrés, valeur à comparer avec la valeur de la température de sortie de four qui est elle supérieure à 600° C, suffit en effet à entraîner une modification du comportement du verre et à générer des défauts notamment des variations du galbe après l'étape de formage. A cette précision requise pour le chauffage s'ajoute la nécessité à caractère économique cette fois, d'une production à hauts rendements qui suppose une limitation au strict minimum du temps de séjour des feuilles de verre dans le four. En règle générale, les fours sont dits traversant, c'est-à-dire que la feuille de verre les traverse de part en part, déplacée par des moyens prévus pour faire cheminer la feuille de verre au travers des différentes unités de chauffe. Dans les installations dites verticales, ces moyens sont essentiellement constitués par des pinces qui se déplacent sur un rail. Ces pinces permettent de contrôler très précisément la position du verre dans le four ce qui constitue un avantage important lorsque l'étape suivante consiste dans une opération de bombage, surtout si la forme désirée est complexe ; la phase de bombage comportant alors le plus souvent au moins une phase de pressage. Toutefois, ces pinces laissent des marques inadmissibles selon les normes de qualité les plus grandes qui sont presque toujours requises par les fabricants actuels d'automobiles.

Dans ces conditions les installations dites horizontales supplantent peu à peu les installations verticales. Dans ces installations, les moyens pour faire cheminer les feuilles de verre au travers du four sont généralement constitués par des rouleaux moteurs sur lesquels la feuille de verre repose en position horizontale ou sensiblement horizontale, ou par des moyens de convoyage équivalents.

Dans la demande de brevet EP-A-241 356, il est par exemple décrit un four comportant deux nappes supérieure et inférieure de chauffage constituées par des résistances électriques placées de part et d'autre du chemin suivi par la feuille de verre, chaque nappe étant divisée en plusieurs zones longitudinales indépendantes, elles-mêmes divisées en sous-zones transversales régulées de façon indépendante et disposées de façon à ce que les espaces de séparation entre les sous-zones transversales ne constituent pas des bandes "froides" parallèles à la direction de la feuille de verre. Les résistances électriques sont réalisées par des fils boudinés autour de tubes en silice, ces tubes étant orientés parallèlement à la largeur du four, ou en d'autres termes perpendiculairement à la direction générale d'avancée des feuilles de verre qui défilent au travers du four. Une telle disposition des résistances est particulièrement bien adaptée au chauffage uniforme des feuilles de verre ou à un chauffage différencié de la partie centrale et des bords de la feuille de verre, cette différenciation des températures n'étant possible que sur des portions de surface assez grandes, chaque portion de la feuille de verre couvrant par exemple au minimum 10 % de la surface totale. Les exigences de qualité évoluant petit à petit vers l'exclusion totale des marques de pinces, ce type de four horizontal tend à être employé également pour les cas de formage selon de très petits rayons de courbure avec la formation pratiquement de pliures, notamment les plus difficiles à obtenir à savoir des pliures localisées près des bords des feuilles de verre.

Dans ces cas, il ne s'agit plus d'un chauffage différencié de toute une portion de la surface. Au contraire, il devient nécessaire de contrôler pratiquement point par point-la température de la feuille de verre ; ceci afin de délimiter par exemple des lignes de pliage, correspondant généralement à la nécessité d'une surchauffe afin d'augmenter localement la plasticité du verre.

Un ancien procédé connu de surchauffe localisée consiste à couvrir la surface de la feuille de verre le long de la ligne de pliage d'un corps noir, par exemple de la poudre de carbone, de sorte que le verre absorbe localement plus de chaleur. Toutefois la dépose du corps noir nécessite un équipement supplémentaire , de plus la surchauffe est dictée par la température du reste de la feuille de verre et la nature même du corps noir, d'où un manque de souplesse.

Il est également connu d'utiliser des moyens de surchauffe solidaires du four et non des feuilles de verre. Dans le brevet US-A-4 441 907 il a été proposé d'utiliser des rampes à gaz montées sur un chariot mobile se déplaçant parallèlement à la direction d'avancée des feuilles de verre : lorsque les rampes à gaz interviennent, c'est-à-dire généralement dans la partie aval du trajet de la feuille de verre, elles sont fixes par rapport à la feuille de verre ce qui permet d'échauffer préférentiellement une bande étroite de la surface du verre. En revanche, ce système demande une mécanique de précision pour synchroniser parfaitement les mouvements du verre et du chariot, et pour opérer des réglages reproductibles pour le positionnement des rampes à gaz. De plus le temps d'immobilisation d'un chariot avec ses rampes à gaz est très long (temps de surchauffe d'un volume et temps de retour en position de départ). Le système connu de US-A-4 441 907 nécessite donc un très grand espacement entre deux feuilles de verre.

Il a été également proposé dans la demande de brevet DE-A-37 42 481, un dispositif permettant de surchauffer localement des bandes parallèles à la direction d'avancée du verre. Pour cela le four est équipé de moyens de surchauffe constitués par des rampes essentiellement parallèles à la longueur du four, suspendues à l'extrémité de perches qui s'avancent plus ou moins profondément dans le four, perpendiculairement à la longueur de celui-ci. Au fur et à mesure que la feuille de verre traverse la zone de surchauffe, les rampes sont écartées - ou au contraire rapprochées - de sorte qu'une bande continue de la feuille de verre soit surchauffée. Avec un tel dispositif de surchauffe, le temps d'immobilisation entre deux vitrages est avantageusement moindre qu'avec le dispositif précédemment décrit. Toutefois, ce dispositif suppose un four suffisamment large pour autoriser l'introduction des feuilles de verre en travers du four, ceci afin que les petits côtés - le long desquels sont disposées les lignes de pliage dans la plupart des modèles - se retrouvent bien situés parallèles à la direction longitudinale du four.

Par ailleurs, ces deux dispositifs de surchauffe localisée connus des publications US-A-4 441 901 et DE-A 3 742 481 comportent de nombreux éléments montés en porte-à-faux, et compte tenu de plus de la température du four, ces éléments sont donc très sensibles aux phénomènes de déformation de sorte que les paramètres de chauffage des feuilles de verre peuvent évoluer au cours du temps et que les réglages doivent être repris pour chaque série de vitrages même si cette série a déjà été fabriquée sur la ligne.

Il est en outre connu du brevet CH-340 962 un four pour le réchauffage et le bombage de feuilles de verre cheminant au travers dudit four sur des moules annulaires appropriés. Le four se décompose en une pluralité de sections où toutes les résistances chauffantes qui se trouvent côté voûte sont disposées parallèlement à l'axe du four, avec, en outre, dans la section dite de cintrage, deux éléments chauffants suspendus de manière réglable à la voûte, également disposés de manière parallèle à l'axe du four.

L'invention a pour but un four horizontal pour le réchauffage de feuilles de verre permettant un chauffage différencié de certaines zones des feuilles de verre et qui ne présente pas les inconvénients précités des dispositifs connus de l'art, et notamment dont les réglages soient parfaitement reproductibles d'une série à l'autre de fabrication.

L'invention concerne un four qui comprend une ou plusieurs cellules de chauffage différencié dont les éléments de chauffage disposés côté voûte sont constitués par des jeux de résistances électriques pilotés en température ou en puissance indépendamment pour chaque jeu, une partie au moins desdites résistances électriques étant montées parallèles à l'axe du four. Ce four comporte également d'autres cellules de chauffe dont chacune constitue une zone longitudinale de chauffe indépendante des autres zones longitudinales, chacune de ces cellules comportant côté voûte des éléments de chauffage constitués par des jeux de résistances électriques répartis en plusieurs sous-zones transversales indépendantes dans lesquelles les résistances électriques sont montées perpendiculaires à l'axe du four.

Le four selon l'invention est donc un four multi-cellulaire de réchauffage de feuilles de verre en mouvement parallèlement à son axe et qui comprend des éléments de chauffage disposés côté voûte et constitués par des jeux de résistances électriques dont au moins une partie est montée parallèlement à l'axe dudit four. Conformément à l'invention, le four se caractérise en ce que les éléments de chauffage sont répartis en deux sections de chauffe successives :
* une première section de chauffe principale se décomposant en une pluralité de cellules longitudinales successives indépendantes, chacune sub-divisée en plusieurs sous-zones transversales indépendantes dans lesquelles les jeux de résistance sont montés perpendiculairement à l'axe du four,
* une seconde section de chauffé différenciée comportant au moins une cellule longitudinale dans laquelle au moins une partie des jeux de résistance sont montés parallèlement à l'axe du four et sont pilotés indépendamment les uns des autres en température et en puissance.

En d'autres termes, le four selon l'invention est un four du type décrit dans la demande de brevet EP-A-241 356 dont une ou plusieurs zones longitudinales sont remplacées par une plusieurs cellules ayant au moins une partie ses résistances orientées parallèlement à la direction de défilement du verre. Dans ces zones longitudinales spécifiques de chauffe on aboutit ainsi à un très grand nombre de sous-zones transversales - en pratique autant que de jeux de résistances, alors que ce nombre est généralement limité à 3 dans le cas connu de la demande de brevet EP-A-241 356.

Par résistance électrique on entend au sens de l'invention, notamment des tubes en céramique réfractaire, autour desquels sont boudinés des fils électroconducteurs, des tubes creux en quartz enfermant des filaments chauffants, des petits éléments chauffants, de préférence carrés, susceptibles d'être assemblés en damiers ou tout autre moyen équivalent connu de l'homme de l'art, le seul point critique étant que ces moyens doivent avoir une orientation longitudinale privilégiée, de sorte que ces moyens ou groupes de moyens sont analogues à un tube-résistance du point de vue des surfaces chauffées.

Comme indiqué plus haut, la cellule de chauffage différenciée selon l'invention a, dans le cas le plus fréquent, une fonction de surchauffe des bords parallèles à la direction d'avancée des feuilles de verre, fonction assurée par les résistances montées parallèles. En regard de la partie centrale de la feuille de verre, on peut prévoir des résistances montées transversales, de sorte que le déplacement du verre suffit à homogénéiser sa température dans cette partie centrale ou des résistances également montées parallèles. Cette dernière dispositif accroît la polyvalence du four, qui peut alors être utilisé pour surchauffer les bords de grands ou de petits volumes ; pour supprimer tout risque d'hétérogénéité de température dans la partie centrale, il est alors généralement préférable de placer la cellule de chauffage différencié selon l'invention à un moment du trajet de la feuille de verre correspondant à l'obtention d'une température supérieure à la température de déformation plastique.

Avantageusement, le four selon l'invention permet de combiner les avantages d'un four tel que celui décrit dans la demande de brevet EP-A-241 356 et ceux des éléments de chauffage différencié, tels que ceux décrits par US-A-4 441 907 ou DE-A-3 742 481, sans pour autant nécessiter l'introduction dans le four d'un nouvel outillage.

S'agissant d'un four multi-cellulaire il va de soi que le four est équipé de moyens pour faire progresser les feuilles de verre d'une cellule de chauffe à l'autre, suivant l'axe du four.

Dans une variante préférée de l'invention, on prévoit en outre des moyens de réglage en hauteur de la position des jeux de résistances électriques, de sorte que les profils de chauffe susceptibles d'être obtenus peuvent varier dans un espace à trois dimensions et non exclusivement à deux dimensions. La hauteur d'une résistance par rapport à la feuille de verre peut être avantageusement réglée entre 10 et 300 mm, la hauteur mini dépendant essentiellement de la déformation à la chaleur de la résistance et des moyens de support de résistance. Pour ce faire, chaque jeu est par exemple constitué par un ou plusieurs tubes, de façon à moduler la largeur du jeu, montés sur un même berceau dont on peut régler la hauteur par rapport au plan de transport des feuilles de verre par exemple entre 20 et 300 mm, ce réglage s'effectuant par des commandes manuelles ou automatiques depuis l'extérieur du four.

Le four multi-cellulaire selon l'invention permet de modifier les conditions de chauffe d'une feuille de verre en jouant sur trois paramètres indépendants : la puissance débitée par les résistances, leur hauteur et le temps de séjour de la feuille de verre dans le four, sous les éléments chauffants.

Ce four multi-cellulaire peut être avantageusement utilisé comme four dit de trempe destiné à réchauffer une à une des feuilles de verre au-delà de leur température de déformation plastique en vue d'un traitement de trempe thermique, lesdites feuilles étant convoyées à plat d'un bout à l'autre du four par un convoyeur horizontal par exemple constitué par une série de rouleaux moteurs. Le traitement de trempe thermique est éventuellement précédé d'une opération de bombage qui met également à profit le réchauffage du verre. Le four peut être également destiné à la production de feuilles de verre émaillées, la composition d'émaillage étant appliquée sur la feuille de verre froide et étant cuite dans le four, cette opération d'émaillage pouvant bien sûr être suivie d'une opération de bombage et/ou de trempe thermique. Le four multi-cellulaire selon l'invention peut également être utilisé pour réchauffer les feuilles de verre une à une ou superposées par paires en vue d'un assemblage par une feuille de matière plastique.

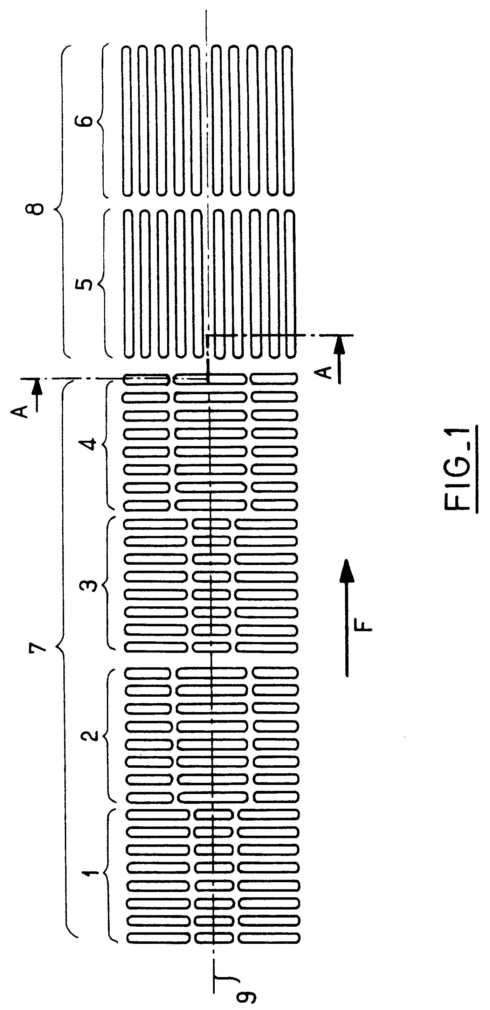

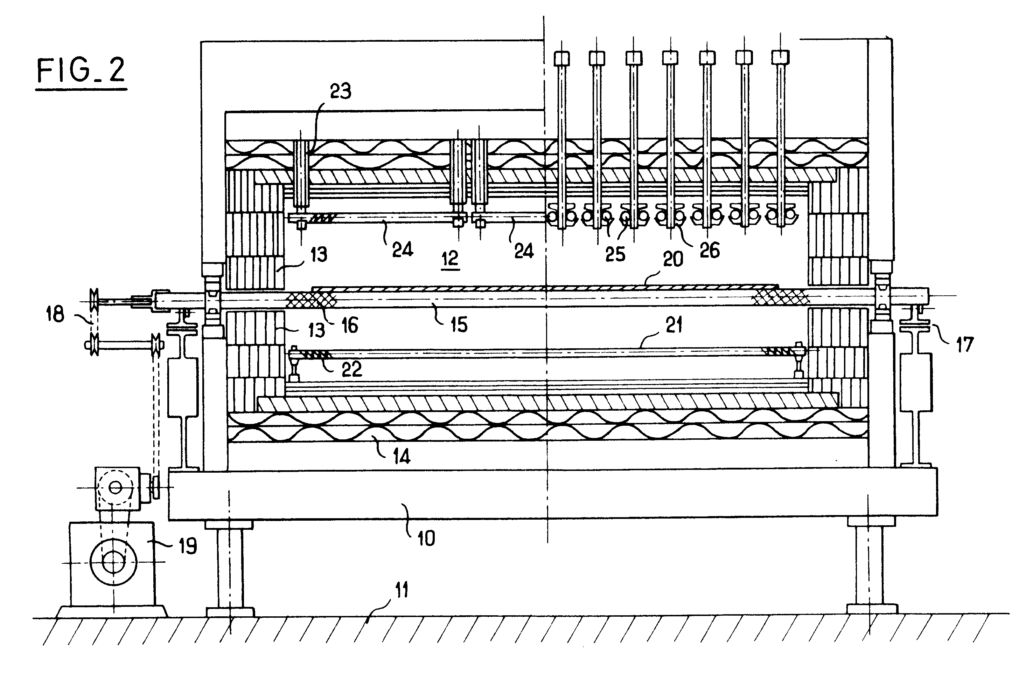

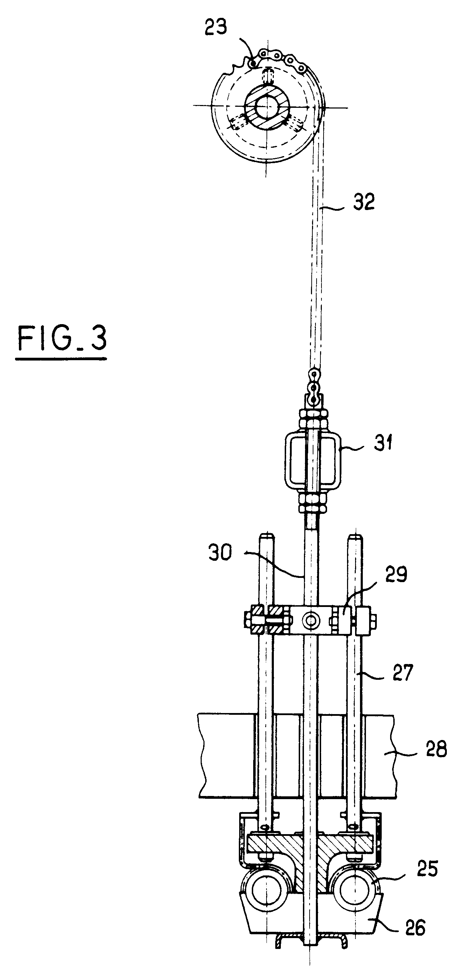

D'autres détails et caractéristiques avantageuses de l'invention ressortent de la description d'un four faite en référence aux dessins annexés qui représentent :
. **figure** 1 : un schéma en vue de dessus d'un four selon l'invention,
. **figure** 2 : une coupe brisée d'un four vue sous un angle analogue à celui de la coupe A-A de la figure 1,
. **figure** 3 : une vue détaillée d'un berceau support de tubes-résistances et de son dispositif de réglage en hauteur.

La figure 1 est une vue schématique de dessus d'un four multi-cellulaire plus spécialement destiné à des installations de bombage-trempe. Dans ce four, les feuilles de verre défilent sans arrêt, en suivant la direction indiquée par la flèche F et sont par exemple convoyées par une série de rouleaux moteurs.

Conformément à l'invention, les éléments de chauffage -associés à la voûte du four et schématisés à la figure 1-sont disposés de manière à réaliser un profil spécifique de chauffe. Le four ici représenté comporte 6 cellules de chauffe numérotées de 1 à 6. Ces cellules de chauffe sont réparties en une section principale de chauffage 7 correspondant aux quatre premières cellules 1, 2, 3, 4 et une section de chauffage différencié 8.

Les éléments de chauffage de la cellule sont constitués par des tubes en céramique réfractaire, par exemple des tubes en silice ou en alumino-silicates, autour desquels sont boudinés des fils métalliques. D préférence, ces résistances garnissent également la sole du four où elles sont montées, par exemple, perpendiculairement à l'axe 9 du four. Pour la sole on peut utiliser des tubes montés fixes et dont les extrémités ne débordent pas à l'extérieur du four. De préférence, les résistances de la sole sont réparties également par zone, par exemple au nombre de 6, chaque zone étant alimentée en puissance électrique de manière indépendante des autres zones. Les parois du four parallèles à l'axe 9 sont de préférence également munies de tubes-résistances montés fixes. Toutes ces dispositions sont bien connues de l'art et n'appellent pas de commentaires particuliers.

Dans la section principale 7, les résistances électriques associées à la voûte sont montées de manière fixe et sont disposées transversalement, c'est-à-dire perpendiculaires à la direction générale d'avancée des feuilles de verre. Conformément aux enseignements de EP-A-241 356 toutes les cellules de la section principale 7 sont indépendantes du point de vue de la puissance électrique fournie et sont sous-divisées en trois sous-zones transversales, deux cellules contiguës étant telles que leurs espaces intercalaires de séparation entre deux sous-zones transversales ne soient pas dans le même alignement, afin d'éviter la constitution de bandes "froides" parallèles à l'axe 9 du four.

A la suite de cette section principale 7 dans laquelle les feuilles de verre sont réchauffées de manière homogène ou avec une légère différenciation entre la partie centrale et les parties latérales, les feuilles de verre pénètrent dans la section de chauffage différencié 8. Cette zone 8 n'est constituée que par deux cellules 5, 6, alimentées en puissance électrique indépendamment l'une l'autre et dans lesquelles les résistances sont montées parallèles à l'axe 9 du four, et sont regroupées, par exemple, par deux de manière à former un très grand nombre de zones longitudinales, de préférence un nombre supérieur à dix.

Une telle disposition permet de chauffer la feuille de verre par bandes longitudinales. Elle ne concerne donc généralement qu'une partie du four - de préférence la partie terminale, c'est-à-dire un lieu où les feuilles de verre ont déjà atteint leur température de déformation plastique, une surchauffe même très importante ne risquant plus de provoquer des déformations du verre par déformation sur les rouleaux, mais dans certains cas on peut débuter très tôt ce chauffage différencié.

Le four multi-cellulaire selon l'invention est représenté de façon plus détaillée figure 2, dans une vue en coupe brisée.

Le four est porté par une ossature métallique 10 posée sur pieds sur le sol 11. L'enceinte chaude 12 est délimitée par des parois en briques réfractaires 13, de même que la sole et la voûte du four qui sont de plus protégés par des couches d'isolants fibreux légers 14. Ce four est muni d'un convoyeur constitué par une série de rouleaux moteurs 15 de préférence formés par des tubes creux en silice revêtus d'un tissu 16 en fibres réfractaires. Ces rouleaux 15 traversent le four de part en part et sont guidés par des paliers de roulement 17 disposés à l'extérieur du four ; ils sont mus en rotation par des chaînes 18 entraînées par un moteur 19.

La feuille de verre 20 véhiculée par les rouleaux 15 est chauffée par le bas par des résistances 21 constituées par des tubes en alumino-silicates autour desquelles sont boudinés des fils 22 électriques. Ces tubes sont montés fixes, non traversant, parallèles aux rouleaux moteurs 15. Dans la section principale du four qui correspond à la partie gauche de la figure, les éléments chauffés associés à la voûte sont également montés de manière fixe, parallèles aux rouleaux moteurs 15 et à une distance de ceux-ci de par exemple 250 mm et sont suspendus par des potences 23. Plusieurs tubes 24 sont utilisés pour couvrir la largeur du four afin de constituer des sous-zones transversales indépendantes.

Dans la section de chauffage différencié, représentée sur la partie droite de la figure, on a 14 tubes-résistances 25 disposés parallèlement à l'axe du four et disposés deux par deux sur des berceaux 26 montés à une distance des rouleaux moteurs par exemple variable entre 15 et 250 mm, et représentés de manière plus particulièrement détaillée figure 3.

Sur cette figure 3, on note que les tubes 25 sont posés deux par deux à leur extrémité sur des berceaux 26. Les fils électriques boudinés autour des tubes 24 sont connectés à une alimentation électrique via des tubulures isolées 27 passant au travers de la voûte 28, fixées par des attaches 29 à une potence 30 supportant égalaient les berceaux 26. A l'extrémité supérieur de la potence 30 est vissée une attache 31 sur laquelle se raccorde une chaîne 32 engrenant sur une roue dentée 33. Pour abaisser le berceau, il suffit donc de tourner la roue 33, par exemple d'un tiers de tour et de la bloquer une fois les résistances 25 mises en place. La rotation des roues 33 peut être commandée manuellement ou de préférence par un dispositif automatique piloté depuis le tableau de contrôle du four.

En faisant varier et les puissances fournies aux différents jeux de résistances électriques et la hauteur des berceaux 26, on peut obtenir une très grande variété de profils de chauffe, adaptés au mieux à la taille et à la forme des vitrages que l'on souhaite fabriquer. Cette variété peut être encore accrue si on dispose de moyens pour faire varier la vitesse de défilement de la feuille de verre au travers du four, notamment si le convoyeur à rouleaux est constitué d'au moins deux tronçons indépendants dont un correspond à la section de chauffage différencié.

Le four selon l'invention permet sur une longueur relativement faible de chauffer exactement dans les conditions souhaitées les feuilles de verre ce qui permet de contrôler au mieux les effets de double-bombage et/ou d'obtenir des courbures prononcées par exemple à proximité des bords du vitrage.

## Revendications

1. Four multi-cellulaire de réchauffage de feuilles de verre (20) en mouvement parallèlement à son axe (9) comprenant des éléments de chauffage disposés côté voûte et constitués par des jeux de résistances électriques dont au moins une partie est montée parallèlement à l'axe (9) dudit four, caractérisé en ce que lesdits éléments de chauffage sont répartis en deux sections de chauffe successives :
* une première section de chauffe principale (7) se décomposant en une pluralité de cellules longitudinales (1, 2, 3, 4) successives indépendantes, chacune subdivisée en plusieurs sous-zones transversales indépendantes dans lesquelles les jeux de résistances sont montés perpendiculairement à l'axe (9) du four,
* une seconde section de chauffe différenciée (8) comportant au moins une cellule longitudinale (5, 6) dans laquelle au moins une partie des jeux de résistance sont montés parallèlement à l'axe (9) du four et sont pilotés indépendamment les uns des autres en température ou en puissance.

2. Four multi-cellulaire selon la revendication 1, **caractérisé on ce que** tous les jeux de résistances de la section de chauffe différenciée (8) sont montés parallèles à l'axe (9) du four.

3. Four multi-cellulaire selon la revendication 2, **caractérisé en ce que** la section de chauffe différenciée (8) comporte deux cellules (5, 6), munies chacune d'au moins dix jeux de résistances parallèles à l'axe (9) du four.

4. Four multi-cellulaire selon l'une des revendications précédentes, **caractérisé en ce que** dans la section de chauffe principale (7), les espaces intercalaires de séparation entre deux sous-zones transversales de deux cellules longitudinales (1, 2, 3, 4) contigües ne sont pas dans le même alignement.

5. Four multi-cellulaire selon l'une des revendications précédentes, **caractérisé en ce que** les résistances électriques sont constituées par des moyens ou groupes de moyens de chauffage disposés selon une orientation longitudinale.

6. Four multi-cellulaire selon l'une des revendications 1 ou 2, **caractérisé en ce que** les résistances électriques sont constituées par des tubes (25) en céramique réfractaire autour desquels sont boudinés les fils électroconducteurs.

7. Four multi-cellulaire selon l'une des revendications précédentes, **caractérisé en ce que** les cellules longitudinales (5, 6) de la section de chauffe différenciée (8) comportent des moyens de réglage en hauteur de la position des jeux de résistances électriques afin d'obtenir différents profils de chauffe tridimensionnels.

8. Four multi-cellulaire selon l'une des revendications 6 ou 7, **caractérisé en ce que** la distance entre un tube-résistance (25) et la feuille de verre (20) est choisie entre 10 et 300 mm

9. Four multicellulaire selon l'une des revendications 5 à 8, **caractérisé on ce que** chaque jeu de résistances électriques est constitué par un nombre variable de tubes (25) montés sur un berceau (26) commun dont on peut régler la hauteur par rapport au plan de transport des feuilles de verre (20).

10. Four multi-cellulaire selon l'une des revendications précédentes, **caractérisé en ce que** les berceaux (26) sont fixés sur des potences (30) suspendues à des chaînes (32).

11. Four multicellulaire selon l'une des revendications précédentes**, caractérisé en ce que** des moyens sont prévus pour modifier la vitesse de défilement des feuille de verre (20) dans les différentes sections (7, 8) du four.

12. Application du four multi-cellulaire selon l'une des revendications précédentes à la production de vitrages bombés trempés.

## Claims

1. Multi-station reheating furnace for glass sheets (20) moving parallel to its axis (9), comprising heating elements disposed at the vault side and constituted of sets of electrical resistors, at least a portion of which is mounted parallel to the axis (9) of said furnace, characterized in that said heating elements are distributed in two successive heating sections:
- a first, principal heating section (7) made up of a plurality of successive independent longitudinal stations (1, 2, 3, 4), each subdivided into several independent transverse sub-zones, in which the sets of resistors are mounted perpendicularly to the axis (9) of the furnace,
- a second, differentiated heating section (8), comprising at least one longitudinal station (5, 6), in which at least a portion of the sets of resistors are mounted parallel to the axis (9) of the furnace and are controlled independently of one another in temperature or in power.

2. Multi-station furnace according to Claim 1, characterized in that all the sets of resistors of the differentiated heating section (8) are mounted parallel to the axis (9) of the furnace.

3. Multi-station furnace according to Claim 2, characterized in that the differentiated heating section (8) comprises two stations (5, 6), each equipped with at least ten sets of resistors parallel to the axis (9) of the furnace.

4. Multi-station furnace according to one of the preceding Claims, characterized in that, in the principal heating section (7), the intermediate separation spaces between two transverse sub-zones of two contiguous longitudinal stations (1, 2, 3, 4) are not in the same alignment.

5. Multi-station furnace according to one of the preceding Claims, characterized in that the electrical resistors are constituted of heating means or groups of heating means disposed in a longitudinal orientation.

6. Multi-station furnace according to one of Claims 1 or 2, characterized in that the electrical resistors are constituted of tubes (25) of refractory ceramic, around which are wrapped the electrically conducting wires.

7. Multi-station furnace according to one of the preceding Claims, characterized in that the longitudinal stations (5, 6) of the differentiated heating section (8) comprise means for regulating the height of the position of the sets of electrical resistors for the purpose of obtaining different three-dimensional heating profiles.

8. Multi-station furnace according to one of Claims 6 or 7, characterized in that the distance between a resistor tube (25) and a glass sheet (20) is chosen between 10 and 300 mm.

9. Multi-station furnace according to one of Claims 5 to 8, characterized in that each set of electrical resistors is constituted of a variable number of tubes (25) mounted on a common cradle (26), the height of which relative to the conveying plane of the glass sheets (20) can be regulated.

10. Multi-station furnace according to one of the preceding Claims, characterized in that the cradles (26) are fixed to brackets (30) suspended from chains (32).

11. Multi-station furnace according to one of the preceding Claims, characterized in that means are provided for modifying the speed of travel of the glass sheets (20) through the various sections (7, 8) of the furnace.

12. Application of the multi-station furnace according to one of the preceding Claims to the production of toughened, bent panes.

## Patentansprüche

1. Mehrzelliger Erwärmungsofen für Glasscheiben (20), die sich parallel zu seiner Achse (9) bewegen, welcher Heizelemente umfaßt, die deckenseitig angeordnet sind und aus Sätzen von Heizwiderständen bestehen, die wenigstens teilweise parallel zur Achse (9) des Ofens angebracht sind, **dadurch gekennzeichnet**, **daß** die Heizelemente auf zwei aufeinanderfolgende Heizabschnitte verteilt sind, und zwar
- einen ersten Hauptheizabschnitt (7), der aus einer Vielzahl aufeinanderfolgender unabhängiger langgestreckter Zellen (1, 2, 3, 4) gebildet ist, die jeweils in mehrere unabhängige querverlaufende Unterzonen unterteilt sind, in denen die Heizwiderstandssätze senkrecht zur Achse (9) des Ofens angebracht sind, und
- einen zweiten unterschiedlichen Heizabschnitt (8), der wenigstens eine längsverlaufende Zelle (5, 6) enthält, in welcher wenigstens ein Teil der Heizwiderstandssätze parallel zur Achse (9) des Ofens angebracht und in Temperatur oder Leistung unabhängig voneinander steuerbar sind.

2. Mehrzelliger Ofen nach Anspruch 1, **dadurch gekennzeichnet**, daß sämtliche Heizwiderstandssätze des unterschiedlichen Heizabschnitts (8) parallel zur Achse (9) des Ofens angebracht sind.

3. Mehrzelliger Ofen nach Anspruch 2, **dadurch gekennzeichnet**, **daß** der abgegrenzte Heizabschnitt (8) zwei Zellen (5, 6) enthält, die jeweils mit wenigstens zehn Sätzen aus zur Achse (9) des Ofens parallelen Heizwiderständen versehen sind.

4. Mehrzelliger Ofen nach einem der vorhergehenden Ansprüche, **dadurch gekennzeichnet**, **daß** im Hauptheizabschnitt (7) die Zwischenräume zwischen zwei querverlaufenden Unterzonen von zwei benachbarten längsverlaufenden Zellen (1, 2, 3, 4) ungleich ausgerichtet sind.

5. Mehrzelliger Ofen nach einem der vorhergehenden Ansprüche, **dadurch gekennzeichnet**, **daß** die Heizwiderstände aus Heiz-mitteln oder Gruppen von Heizmitteln bestehen, die in einer Längsrichtung angeordnet sind.

6. Mehrzelliger Ofen nach Anspruch 1 oder 2, **dadurch gekenn**-**zeichnet**, **daß** die Heizwiderstände aus feuerfesten Keramik-rohren (25) bestehen, um welche elektrische Leitungsdrähte gewickelt sind.

7. Mehrzelliger Ofen nach einem der vorhergehenden Ansprüche, **dadurch gekennzeichnet**, **daß** die längsverlaufenden Zellen (5, 6) des unterschiedlichen Heizabschnitts (8) zur Erzeugung verschiedener dreidimensionaler Heizprofile Mittel für die Höhenregelung der Position der Heizwiderstandssätze enthalten.

8. Mehrzelliger Ofen nach Anspruch 6 oder 7, **dadurch gekennzeichnet**, **daß** der Abstand zwischen einem Heizwiderstandsrohr (25) und der Glasscheibe (20) zwischen 10 und 300 mm ausgewählt ist.

9. Mehrzelliger Ofen nach einem der Ansprüche 5 bis 8, **dadurch gekennzeichnet**, **daß** jeder Satz Heizwiderstände aus einer veränderlichen Anzahl von Rohren (25) gebildet ist, die auf einer gemeinsamen Halterung (26) angebracht sind, welche in bezug auf die Transportebene der Glasscheiben (20) höhengeregelt werden kann.

10. Mehrzelliger Ofen nach einem der vorhergehenden Ansprüche, **dadurch gekennzeichnet**, **daß** aie Halterungen (26) auf an Ketten (32) aufgehängten Tragarmen (30) befestigt sind.

11. Mehrzelliger Ofen nach einem der vohergehenden Ansprüche, **dadurch gekennzeichnet**, **daß** Mittel vorgesehen sind, um die Durchlaufgeschwindigkeit der Glasscheiben (20) in den verschiedenen Abschnitten (7, 8) des Ofens anzupassen.

12. Verwendung des mehrzelligen Ofens nach einem der vorhergehenden Ansprüche zur Herstellung vorgespannter gebogener Glasscheiben.
